# EUROPÄISCHE PATENTSCHRIFT

(11) **EP 1 013 966 B1**
(45) Veröffentlichungstag und Bekanntmachung des Hinweises auf die Patenterteilung: **25.09.2002**
(21) Anmeldenummer: 99125459.0
(22) Anmeldetag: 21.12.1999
(51) Int. Cl.: F16H 3/00, F16H 3/093

(54) **Zahnräderwechselgetriebe mit zwei im Kraftfluss parallel zueinander angeordneten Teilgetrieben**
Toothed speed-changing gearing with two parallel transmission paths
Boite de vitesses à engrenages avec division de puissance

(30) Priorität: 24.12.1998 DE 19860250; 24.04.1999 DE 19918734
(43) Veröffentlichungstag der Anmeldung: 28.06.2000
(73) Patentinhaber: DaimlerChrysler AG, 70567 Stuttgart (DE)
(72) Erfinder: Sperber, Ralf, 73240 Wendlingen (DE); Tscheplak, Ernst, 71384 Weinstadt (DE); Wörner, Günter, 71394 Kernen (DE)

(56) Entgegenhaltungen:
- US-A- 4 658 663
- US-A- 4 823 628

## Beschreibung

Die Erfindung betrifft ein Zahnräderwechselgetriebe mit zwei im Kraftfluß parallel zueinander angeordneten Teilgetrieben nach dem Oberbegriff des Anspruchs 1 sowie ein Verfahren zum Schalten derartiger Zahnräderwechselgetriebe.

Die in Kraftfahrzeugen vorherrschenden Handschaltgetriebe mit einer Reibkupplung sind einfach und robust, haben jedoch den Nachteil, daß während des Gangwechsels eine Zugkraftunterbrechung auftritt. Konventionelle Automatikgetriebe mit einem hydrodynamischen Wandler vermeiden zwar eine Zugkraftunterbrechung während des Gangwechsels, besitzen jedoch aufgrund des Wandlers einen schlechteren Wirkungsgrad als Handschaltgetriebe. Ferner besitzen sie ein höheres Gewicht und sind kostenintensiver.

Bei Zahnräderwechselgetrieben mit zwei reibschlüssigen Lastschaltkupplungen und zwei im Kraftfluß parallel zueinander angeordneten Teilgetrieben können Gangwechsel unter Last durchgeführt werden, und zwar mit einer Überschneidungssteuerung der Lastschaltkupplungen. Damit können kostengünstige Automatikgetriebe mit einem guten Wirkungsgrad erreicht werden. In der Regel sind die geraden Getriebegänge dem einen Teilgetriebe und die ungeraden Getriebegänge dem anderen Teilgetriebe zugeordnet, so daß sequentiell unter Last geschaltet werden kann, jedoch nicht ohne weiteres einzelne Getriebegänge übersprungen werden können, sogenanntes Doppelhochschalten bzw. Doppelrückschalten.

Aus der US 4,658,663 ist ein gattungsbildendes Zahnräderwechselgetriebe bekannt. Bei dem Zahnräderwechselgetriebe ist eine Eingangswelle mit einer Ausgangswelle durch ein erstes und ein zweites Teilgetriebe verbunden, die im Kraftfluß parallel zueinander angeordnet sind und je eine reibschlüssige Lastschaltkupplung aufweisen. Mit den Lastschaltkupplungen sind konzentrisch zueinander angeordnete Zwischenwellen der Teilgetriebe mit der Eingangswelle verbindbar. Die Zwischenwellen sind über Getriebekonstanten, über eine gemeinsame, parallel zur Eingangswelle angeordnete Vorgelegewelle und über Zahnradpaare mit der Ausgangswelle wirkungsmäßig verbindbar. Die Zahnradpaare für die Vorwärtsgetriebegänge I, III, und IV sowie das Zahnradpaar für den Rückwärtsgetriebegang gehören dem ersten Teilgetriebe an. Der vierte Getriebegang ist als direkter Getriebegang ausgelegt und kann durch Einrücken eines Schaltelements zwischen der Ausgangswelle und der Zwischenwelle des ersten Teilgetriebes geschaltet werden.

Dem zweiten Teilgetriebe gehören die Zahnradpaare der Vorwärtsgänge II und V sowie ein zusätzliches Zahnradpaar an, deren Übersetzung gleich der Übersetzung des dritten Getriebegangs ist, dessen Zahnradpaar dem ersten Teilgetriebe angehört. Im ersten Teilgetriebe ist eine Zahnradkupplung für den dritten Getriebegang und die Direktkupplung für den vierten Getriebegang zu einer Wechselkupplung mit einer gemeinsamen Schaltschiebemuffe zusammengefaßt, welche mit einem Losrad des Zahnradpaars für den dritten Getriebegang oder mit der Ausgangswelle kuppelbar ist.

Die Lastschaltkupplungen der Teilgetriebe sind den Getriebegängen wechselweise zugeordnet. Zum Anfahren aus dem ersten Getriebegang wird stets die erste Lastschaltkupplung des ersten Teilgetriebes genutzt, wodurch an dieser gegenüber der zweiten Lastschaltkupplung ein erhöhter Verschleiß auftritt.

Der Erfindung liegt die Aufgabe zugrunde, ein gattungsgemäßes Zahnräderwechselgetriebe weiterzuentwickeln und insbesondere längere Wartungsintervalle, einen geringeren Verschleiß und eine höhere Sicherheit zu erreichen. Sie wird gemäß der Erfindung durch die Merkmale der unabhängigen Ansprüche gelöst. Weitere Ausgestaltungen ergeben sich aus den Unteransprüchen.

Die Erfindung geht aus von einem Zahnräderwechselgetriebe, bei dem eine Eingangswelle mit einer Ausgangswelle durch ein erstes und ein zweites Teilgetriebe verbunden ist, die im Kraftfluß parallel zueinander angeordnet sind. Die Teilgetriebe besitzen je eine reibschlüssige Lastschaltkupplung und je eine Zwischenwelle, wobei jeweils die Zwischenwelle über die Lastschaltkupplung mit der Eingangswelle wirkungsmäßig verbindbar ist. Ferner besitzt das Zahnräderwechselgetriebe zumindest eine erste Getriebekonstante.

Es wird vorgeschlagen, daß die erste Lastschaltkupplung über eine Getriebekonstante und die zweite Lastschaltkupplung über eine Getriebekonstante mit einer Übersetzung des niedrigsten Getriebegangs zum Anfahren mit der Ausgangswelle in Wirkverbindung bringbar ist. Beide Lastschaltkupplungen können für den Anfahrvorgang aus dem niedrigsten bzw. ersten Getriebegang genutzt werden. Die sich aus dem Anfahrvorgang ergebende Belastung kann auf beide Lastschaltkupplungen verteilt werden. Eine überhöhte Temperatur kann trotz kostengünstiger Dimensionierung vermieden, der Verschleiß reduziert und die Wartungsintervalle können verlängert werden. Ferner kann bei Ausfall einer Lastschaltkupplung die zweite Lastschaltkupplung zum Anfahren aus dem ersten Getriebegang genutzt und die Mobilitätssicherheit erhöht werden. Möglich ist auch, die Lastschaltkupplungen unterschiedlich für verschiedene Anfahrvorgänge auszulegen.

Die erfindungsgemäße Lösung kann bei einem Zahnräderwechselgetriebe eingesetzt werden, bei dem die Zwischenwellen über zumindest eine Vorgelegewelle und über zumindest ein Zahnradpaar mit einer Ausgangswelle verbunden ist. Daneben kann die erfindungsgemäße Lösung auch bei einem Zahnräderwechselgetriebe eingesetzt werden, bei dem die Zwischenwellen mit zumindest einer Getriebekonstante direkt mit zumindest einer Ausgangswelle verbunden sind. Zahnräderwechselgetriebe mit einer Vorgelegewelle werden in der Regel bei Kraftfahrzeugen mit Heckantrieb und Zahnräderwechselgetriebe ohne Vorgelegewelle werden in der Regel bei Kraftfahrzeugen mit Frontantrieb eingesetzt.

Besonders vorteilhaft sind die erste und die zweite Lastschaltkupplung gleichzeitig mit der Übersetzung des niedrigsten Getriebegangs mit der Ausgangswelle wirkungsmäßig verbindbar. Die Lastschaltkupplungen können dadurch besonders kostengünstig und leicht dimensioniert werden.

Die erfindungsgemäße Lösung kann durch verschiedene, dem Fachmann als geeignet erscheinende Ausführungen erreicht werden, beispielsweise mit zwei gleichen Getriebekonstanten, wobei eine Getriebekonstante der ersten und eine Getriebekonstante der zweiten Zwischenwelle zugeordnet ist und über die Getriebekonstanten, über zumindest eine Vorgelegewelle und über ein gemeinsames Zahnradpaar oder über zwei gleiche Zahnradpaare auf eine Ausgangswelle abgetrieben werden kann oder indem über zwei gleiche Getriebekonstanten direkt auf zumindest eine Ausgangswelle abgetrieben werden kann. Ferner können mit unterschiedlichen Getriebekonstanten durch unterschiedliche Zahnradpaare zwei erste Getriebegänge geschaffen werden.

Besonders vorteilhaft ist jedoch zumindest die dem niedrigsten Getriebegang zugeordnete Getriebekonstante mit der ersten und der zweiten Lastschaltkupplung in Wirkverbindung bringbar. Es können beide Lastschaltkupplungen über die gleiche Getriebekonstante und über das gleiche Zahnradpaar mit der Ausgangswelle verbunden werden. Zusätzliche Zahnradpaare, Gewicht und Bauraum sowie Montageaufwand und Kosten können eingespart und durch ein geringes Gewicht und eine geringe rotierende Masse kann ein hoher Wirkungsgrad erreicht werden. Ferner können die Lastschaltmöglichkeiten erhöht und bei einer geringen Anzahl von Zahnradpaaren neben einem sequentiellen Schalten zumindest die wichtigsten Doppelhochschaltungen und Doppelrückschaltungen unter Last ermöglicht werden. Doppelhochschaltungen und Doppelrückschaltungen werden insbesondere vor und nach einem Überholvorgang benötigt.

Aus verschiedenen Gründen kann es sinnvoll sein, anstatt mit dem ersten Getriebegang mit dem zweiten oder einem noch höheren Getriebegang anzufahren, beispielsweise beim langsamen Anfahren mit einer Brennkraftmaschine mit großer Leistung, beim Anfahren auf rutschigem Untergrund, am Gefälle und/oder beim Anfahren mit keinem oder geringem Ladegewicht usw.

Insbesondere beim Anfahren aus einem höheren Getriebegang können hohe Belastungen an einer Lastschaltkupplung auftreten. Um eine dadurch bedingte einseitige Belastung und einen erhöhten Verschleiß zu vermeiden, ist vorteilhaft die erste Lastschaltkupplung über eine Getriebekonstante und die zweite Lastschaltkupplung über eine Getriebekonstante zum Anfahren mit einer Übersetzung des zweitniedrigsten Getriebegangs bzw. des zweiten Getriebegangs mit der Ausgangswelle in Wirkverbindung bringbar. Grundsätzlich ist auch denkbar, daß beide Lastschaltkupplungen zum Anfahren mit einer Übersetzung eines noch höheren Getriebegangs mit der Ausgangswelle wirkungsmäßig verbindbar sind.

Sind die erste und die zweite Lastschaltkupplung gleichzeitig mit der Übersetzung des zweiten Getriebegangs mit der Ausgangswelle wirkungsmäßig verbindbar, können die Lastschaltkupplungen besonders kostengünstig und leicht dimensioniert werden.

Eine gleichzeitige Verbindung kann vorteilhaft dadurch ermöglicht werden, daß auf der ersten Zwischenwelle ein Zähnrad der ersten Getriebekonstanten angeordnet ist und auf der zweiten Zwischenwelle ein Zahnrad von zumindest einer zweiten Getriebekonstanten angeordnet ist und die erste Zwischenwelle über ein zwischen den Zahnrädern angeordnetes Schaltelement und über die zweite Getriebekonstante mit der Ausgangswelle in Wirkverbindung bringbar ist. Zusätzliche Zahnradpaare, Bauraum und Kosten können eingespart werden.

Ist ein Zahnradpaar dem ersten und dem zweiten Getriebegang zugeordnet, kann ein Zahnradpaar zum Anfahren aus dem ersten und zum Anfahren aus dem zweiten Getriebegang genutzt und entsprechend dimensioniert werden. Ferner können insbesondere in einer Neutralstellung die Schaltelemente für den zweiten Getriebegang vorgewählt werden, so daß nach dem Anfahren aus dem ersten Getriebegang allein durch eine Überschneidungssteuerung der Lastschaltkupplungen vom ersten in den zweiten Getriebegang geschaltet werden kann. Der unter meist hoher Last stattfindende Gangwechsel vom ersten in den zweiten Getriebegang kann besonders komfortabel vollzogen werden.

In einer erfindungsgemäßen Ausgestaltung wird vorgeschlagen, daß die Zwischenwelle des ersten Teilgetriebes über die erste Getriebekonstante mit einer zur Eingangswelle parallelen zweiten Vorgelegewelle verbindbar ist, welche über zumindest ein dem ersten Teilgetriebe zugeordnetes Zahnradpaar mit der Ausgangswelle wirkungsmäßig verbindbar ist, und daß die erste Getriebekonstante wahlweise mit der ersten, der zweiten oder mit beiden Lastschaltkupplungen in Wirkverbindung bringbar ist. Neben einer Nutzung beider Lastschaltkupplungen zum Anfahren aus dem ersten Getriebegang über die erste Getriebekonstante kann eine vorteilhafte Getriebeanordnung mit einer geringen Anzahl von Zahnradpaaren und mit einer hohen Anzahl von Lastschaltmöglichkeiten erreicht werden, bei der neben einem sequentiellen Schalten die wichtigsten Doppelhochschaltungen und Doppelrückschaltungen unter Last möglich sind.

Ist die Ausgangswelle durch ein ein- und ausrückbares Schaltelement zur Bildung eines direkten Getriebegangs mit der Zwischenwelle des ersten Teilgetriebes verbindbar, können vorteilhaft durch die zuschaltbare zweite Vorgelegewelle drei Drehmomentpfade zwischen der Ein- und Ausgangswelle geschaffen werden. Die Drehmomentpfade können wechselweise genutzt und insbesondere kann eine Doppelrückschaltung aus dem direkten Getriebegang und eine Doppelhochschaltung auf den direkten Getriebegang unter Last ohne zusätzliches Zahnradpaar ermöglicht werden.

Ferner kann ein platzsparendes Zahnräderwechselgetriebe mit wenigen Zahnradpaaren und einer hohen Anzahl an Lastschaltmöglichkeiten, insbesondere mit Doppelhoch- und Doppelrückschaitmöglichkeiten unter Last erreicht werden, indem neben der ersten Getriebekonstanten auf der ersten Zwischenwelle zumindest eine davon verschiedene zweite Getriebekonstante auf der zweiten Zwischenwelle angeordnet ist und zumindest eine Getriebekonstante über beide Vorgelegewellen mit der Ausgangswelle in Wirkverbindung bringbar ist. Es kann aus mehreren Getriebegängen wahlweise mit der ersten, der zweiten oder mit beiden Lastschaltkupplungen angefahren werden. Besonders vorteilhaft ist jede Getriebekonstante mit jeder Vorgelegewelle wirkungsmäßig verbindbar, so daß jedes Zahnradpaar mit jeder Getriebekonstanten in Wirkverbindung gebracht werden kann. Jedem Zahnradpaar können zumindest zwei Getriebegänge oder mit mehr als zwei Getriebekonstanten mehr als zwei Getriebegänge zugeordnet werden.

In einer vorteilhaften Ausgestaltung für einen breiten Anwendungsbereich sind neben zwei Getriebekonstanten drei Zahnradpaare für sechs verschiedene Vorwärtsgetriebegänge und ein Zahnradpaar für zumindest einen Rückwärtsgetriebegang angeordnet. Ein Zahnrad des dem vierten und sechsten Getriebegang zugeordneten Zahnradpaars ist auf der zweiten Vorgelegewelle und ein Zahnrad des dem dritten und vierten Getriebegang zugeordneten Zahnradpaars und ein Zahnrad des dem ersten und zweiten Getriebegang zugeordneten Zahnradpaars ist auf der ersten Vorgelegewelle angeordnet.

Eine vorteilhafte Variante besteht ferner darin, daß ein Zahnrad des dem dritten und sechsten Getriebegang zugeordneten Zahnradpaars auf der zweiten Vorgelegewelle und ein Zahnrad des dem zweiten und vierten zugeordneten Zahnradpaars und ein Zahnrad des dem ersten und zweiten zugeordneten Zahnradpaars auf der ersten Vorgelegewelle angeordnet ist. Es kann vorteilhaft ein erster Getriebegang mit einer hohen Übersetzung erreicht werden, beispielsweise für den Einsatz bei einer Brennkraftmaschine mit einem Turbolader, bei einer Brennkraftmaschine mit geringer Leistung, bei einem Geländekraftfahrzeug usw.

Die Lastschaltkupplungen werden vorteilhaft abhängig von zumindest einem Betriebsparameter einzeln oder gemeinsam zum Anfahren genutzt. In einer Ausgestaltung wird vorgeschlagen, daß die Differenzdrehzahl zumindest an einer, vorteilhaft an beiden Lastschaltkupplungen und die zu übertragende Leistung erfaßt und abhängig von der Differenzdrehzahl und der zu übertragenden Leistung die Lastschaltkupplungen einzeln oder gemeinsam zum Anfahren genutzt werden. Wird mit hoher Differenzdrehzahl mit großer Leistung angefahren, werden vorteilhaft beide Lastschaltkupplungen genutzt. Wird mit einer geringen Differenzdrehzahl angefahren, kann allein mit der ersten oder mit der zweiten Lastschaltkupplung angefahren werden, die für unterschiedliche Belastungen unterschiedlich ausgelegt sein können. Die Lastschaltkupplungen können besonders kostengünstig und leicht dimensioniert und mit geringem Verschleiß betrieben werden.

Ferner kann vorteilhaft das Gewicht des Kraftfahrzeugs inklusive Ladung und/oder die Steigung einer Fahrstrecke des Kraftfahrzeugs erfaßt und abhängig von Gewicht und/oder Steigung die Lastschaltkupplungen einzeln oder gemeinsam zum Anfahren genutzt werden. Beim Anfahren an einer großen Steigung und/oder mit einer großen Last werden vorteilhaft beide Lastschaltkupplungen zum Anfahren genutzt.

Mit der Temperatur der Lastschaltkupplung nimmt in der Regel der Verschleiß zu. Um den Verschleiß zu reduzieren, wird erfindungsgemäß zumindest an einer, vorteilhaft an beiden Lastschaltkupplungen die sich einstellende Temperatur erfaßt. Abhängig von der Temperatur der Lastschaltkupplungen, werden diese einzeln oder gemeinsam zum Anfahren genutzt. Steigt die Temperatur einer Lastschaltkupplung über einen bestimmten Wert an, beispielsweise durch häufiges Anfahren in einem Stau bei einer hohen Umgebungstemperatur, können die Lastschaltkupplungen abwechselnd oder gemeinsam genutzt werden. Die Wärmeenergie kann über beide Lastschaltkupplungen vorteilhaft abgeführt, eine erhöhte Temperatur nur bei einer Lastschaltkupplung kann vermieden und der Verschleiß kann reduziert werden.

Um möglichst lange Wartungsintervalle zu erreichen, wird vorgeschlagen, daß der Verschleiß an den Lastschaltkupplungen erfaßt wird und abhängig vom Verschleiß die Lastschaltkupplungen einzeln oder gemeinsam zum Anfahren genutzt werden, und zwar werden die Lastschaltkupplungen derart zum Anfahren eingesetzt, daß sich zumindest bis zu einem gewissen Grad bei beiden Lastschaltkupplungen ein gleich großer Verschleiß einstellt. Erst wenn beide Lastschaltkupplungen weitgehend verschlissen sind, müssen diese ausgewechselt werden. Es können besonders lange Wartungsintervalle erreicht werden. Ferner können bei einer Wartung vorteilhaft beide Lastschaltkupplungen gemeinsam ausgetauscht und Arbeitsaufwand und Kosten gespart werden.

Um zu vermeiden, daß beide Lastschaltkupplungen gleichzeitig vollständig verschlissen sind und gleichzeitig ausfallen, wird vorteilhaft ab einem bestimmten Verschleiß nur noch eine der beiden Lastschaltkupplungen zum Anfahren genutzt. Es wird eine Art Sicherheitspuffer geschaffen, so daß ein Fahrer nach dem Ausfall einer Lastschaltkupplung sicher mit der noch nicht vollständig verschlissenen Kupplung zur nächsten Werkstatt kommt. Dem Fahrer wird vorteilhaft angezeigt, daß für die Anfahrvorgänge nur noch eine Lastschaltkupplung genutzt wird. Dieser kann dadurch sein Fahrverhalten darauf einstellen und kann rechtzeitig eine Werkstatt aufsuchen.

Weitere Vorteile ergeben sich aus der folgenden Zeichnungsbeschreibung. In der Zeichnung ist ein Ausführungsbeispiel der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigt:
- Fig. 1: eine schematische Darstellung eines Zahnräderwechselgetriebes in neutraler Stellung,
- Fig. 2: ein Zahnräderwechselgetriebe nach Fig. 1 beim Anfahren aus dem ersten Getriebegang mit einer ersten Lastschaltkupplung,
- Fig. 3: ein Zahnräderwechselgetriebe nach Fig. 1 beim Anfahren aus dem ersten Getriebegang mit einer zweiten Lastschaltkupplung,
- Fig. 4: ein Zahnräderwechselgetriebe nach Fig. 1 beim Anfahren aus dem ersten Getriebegang mit beiden Lastschaltkupplungen,
- Fig. 5: ein Zahnräderwechselgetriebe nach Fig. 1 beim Anfahren aus dem zweiten Getriebegang mit beiden Lastschaltkupplungen und
- Fig. 6: eine Übersicht über mögliche Gangwechsel.

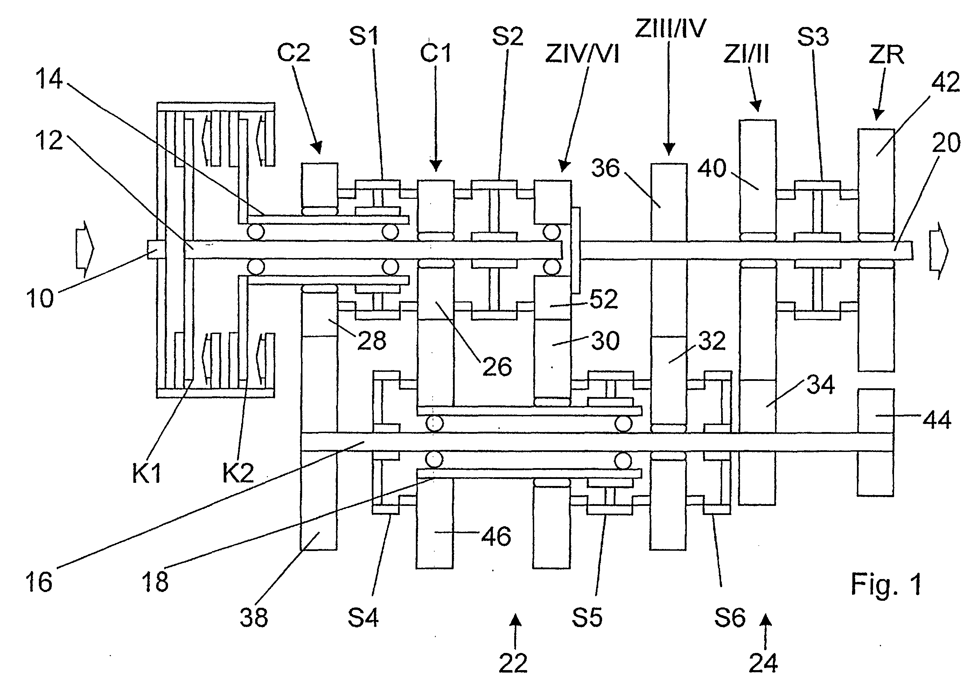

Fig. 1 zeigt ein erfindungsgemäßes Zahnräderwechselgetriebe, bei dem eine Eingangswelle 10 mit einer Ausgangswelle 20 durch ein erstes Teilgetriebe 22 und ein zweites Teilgetriebe 24 verbunden ist, die im Kraftfluß parallel zueinander angeordnet sind. Die Teilgetriebe 22, 24 besitzen je eine reibschlüssige Lastschaltkupplung K1, K2 und je eine Zwischenwelle 12, 14. Die Zwischenwellen 12, 14 sind zueinander konzentrisch und zur Eingangswelle 10 koaxial angeordnet und können jeweils über die Lastschaltkupplung K1, K2 mit der Eingangswelle 10 wirkungsmäßig verbunden werden.

Die erste Zwischenwelle 12 des ersten Teilgetriebes 22 ist einerseits mit der Ausgangswelle 20 durch eine ein- und ausrückbare Zahnradkupplung S2 zur Bildung eines direkten fünften Getriebegangs V und andererseits durch die Zahnradkupplung S2 über eine erste Getriebekonstante C1 mit einer zur Ausgangswelle 20 parallelen, als Hohlwelle ausgeführten Vorgelegewelle 18 wirkungsmäßig verbindbar.

Die Vorgelegewelle 18 des ersten Teilgetriebes 22 ist durch ein Zahnradpaar ZIV/VI zur Bildung des höchsten und des zweithöchsten Getriebegangs IV, VI mit der Ausgangswelle 20 verbunden. Das Zahnradpaar ZIV/VI besitzt ein mit der Ausgangswelle 20 drehfest verbundenes Festrad 52, das mit einem Losrad 30 kämmt. Das Losrad 30 ist konzentrisch und drehbar auf der Vorgelegewelle 18 angeordnet und mit der Vorgelegewelle 18 durch eine ein- und ausrückbare Zahnradkupplung S5 kuppelbar. Im Festrad 56 ist die Zwischenwelle 12 gelagert, wodurch insbesondere Baulänge eingespart werden kann.

Ferner ist die Vorgelegewelle 18 des ersten Teilgetriebes 22 über ein Zahnradpaar ZIII/IV zur Bildung des dritten und des vierten Getriebegangs III, IV mit der Ausgangswelle 20 wirkungsmäßig verbindbar. Das Zahnradpaar ZIII/IV besitzt ein Festrad 36, das auf der Ausgangswelle 20 konzentrisch und drehfest angeordnet ist und ein Losrad 32, das konzentrisch und drehbar auf einer weiteren zur Ausgangswelle 20 parallelen Vorgelegewelle 16 angeordnet ist. Das Losrad 32 ist über die ein- und ausrückbare Zahnradkupplung S5 mit der Vorgelegewelle 18 und mit einer Zahnradkupplung S6 mit der Vorgelegewelle 16 kuppelbar.

Die zweite als Hohlwelle ausgebildete Zwischenwelle 14 des zweiten Teilgetriebes 24 ist über eine zweite Getriebekonstante C2 mit der Vorgelegewelle 16 verbunden, die die Vorgelegewelle 18 des ersten Teilgetriebes 22 mit Spiel durchsetzt. Die zweite Getriebekonstante C2 besitzt ein auf der Zwischenwelle 14 konzentrisch und drehbar angeordnetes Losrad 28, das über eine Zahnradkupplung S1 mit der Zwischenwelle 14 kuppelbar ist, und ein mit der Vorgelegewelle 16 konzentrisch und drehfest verbundenes Festrad 38. Die dem zweiten Teilgetriebe 24 angehörige Vorgelegewelle 16 ist über das Zahnradpaar ZIII/IV für den dritten und vierten Getriebegang III, IV, über ein Zahnradpaar ZI/II für den ersten und zweiten Getriebegang I, II und über ein Zahnradpaar ZR für zwei Rückwärtsgetriebegänge R mit der Ausgangswelle 20 verbunden.

Das Zahnradpaar ZI/II für den ersten und den zweiten Getriebegang I, II besitzt ein auf der Ausgangswelle 20 konzentrisch und drehbar angeordnetes Losrad 40, das mit einer Zahnradkupplung S3 mit der Ausgangswelle 20 kuppelbar ist, und ein auf der Vorgelegewelle 16 konzentrisch und drehfest angeordnetes Festrad 34.

Das Zahnradpaar ZR für die Rückwärtsgetriebegänge R besitzt ein auf der Ausgangswelle 20 konzentrisch und drehbar angeordnetes Losrad 42, das durch die ein- und ausrückbare Zahnradkupplung S3 mit der Ausgangswelle 20 kuppelbar ist, und ein Festrad 44, das konzentrisch und drehfest mit der Vorgelegewelle 16 verbunden ist. Zwischen dem Losrad 42 und dem Festrad 44 des Zahnradpaars ZR ist ein nicht näher dargestelltes Zahnrad zur Drehsinnumkehr angeordnet.

Die erste Getriebekonstante C1 weist ein auf der Vorgelegewelle 16 konzentrisch und drehfest angeordnetes Festrad 46 auf, das mit einem auf der Zwischenwelle 12 des ersten Teilgetriebes 22 konzentrisch und drehbar angeordneten Losrad 26 kämmt. Das Losrad 26 kann durch die ein- und ausrückbare Zahnradkupplung S2 mit der Zwischenwelle 12 des ersten Teilgetriebes 22 und durch die Zahnradkupplung S1 mit der Zwischenwelle 14 des zweiten Teilgetriebes 24 verbunden werden. Die zweite Lastschaltkupplung K2 bzw. die zweite Zwischenwelle 14 ist dadurch neben der zweiten Getriebekonstanten C2 mit der ersten Getriebekonstanten C1 wirkungsmäßig verbindbar. Die erste Getriebekonstante C1 kann durch die Zahnradkupplungen S1 und S2 wahlweise mit der ersten, der zweiten oder mit beiden Lastschaltkupplungen K1, K2 in Wirkverbindung gebracht werden.

Ferner kann die Zwischenwelle 14 des zweiten Teilgetriebes 24 über die zweite Getriebekonstante C2 durch eine ein- und ausrückbare Zahnradkupplung S4 mit dem Festrad 46 der Getriebekonstanten C1 und damit mit der Vorgelegewelle 18 des ersten Teilgetriebes 22 und über das dem ersten Teilgetriebe 22 zugeordneten Zahnradpaar ZIV/VI mit der Ausgangswelle 20 wirkungsmäßig verbunden werden. Die Zwischenwelle 12 kann über die erste Getriebekonstante C1 vorteilhaft durch die ein- und ausrückbare Zahnradkupplung S4 mit der Vorgelegewelle 16 und über die dem zweiten Teilgetriebe 24 zugeordneten Zahnradpaare ZI-II/IV, ZI/II, ZR mit der Ausgangswelle 20 wirkungsmäßig verbunden werden. Mit jeder Getriebekonstanten C1 und C2 kann jeweils über jedes Zahnradpaar ZI/II, ZIII/IV, ZIV/VI, ZR auf die Ausgangswelle 20 abgetrieben werden. Die Getriebekonstanten C1 und C2 sind verschieden, so daß jedes Zahnradpaar ZI/II, ZIII/IV, ZIV/VI, ZR zwei Getriebegängen zugeordnet ist.

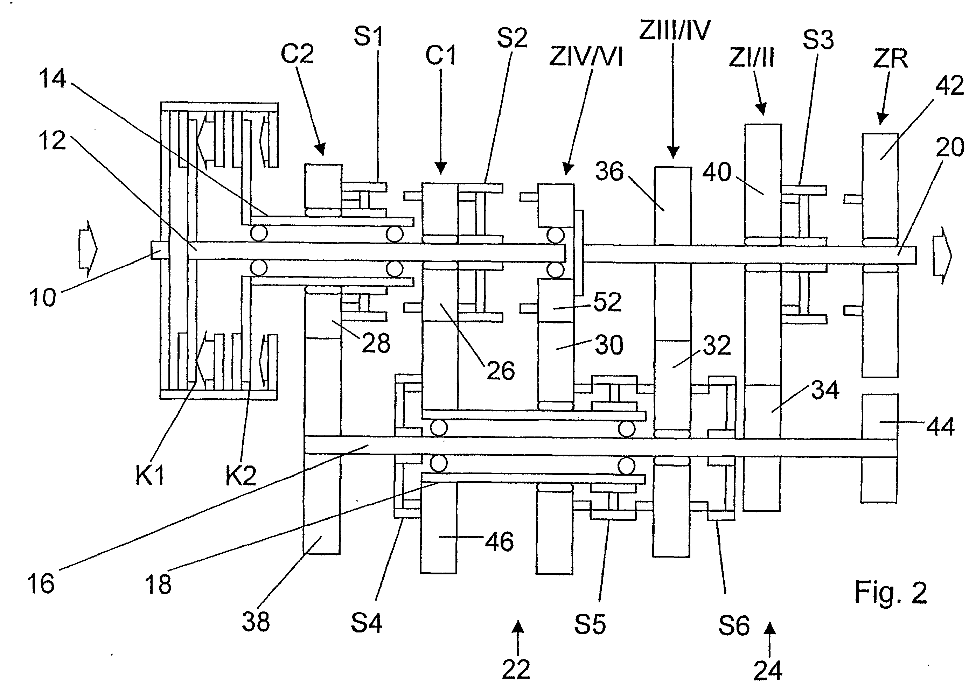

Fig. 2 zeigt das Zahnradwechselgetriebe beim Anfahrvorgang aus dem ersten Getriebegang I mit der ersten Lastschaltkupplung K1. Die Lastschaltkupplung K1 ist geschlossen, die Zahnradkupplung S2 kuppelt das Losrad 26 der ersten Getriebekonstanten C1 mit der Zwischenwelle 12, die Zahnradkupplung S4 kuppelt die Getriebekonstante C1 mit der Vorgelegewelle 16 und die Zahnradkupplung S3 kuppelt das Losrad 40 des Zahnradpaars ZI/II für den ersten und zweiten Getriebegang I, II mit der Ausgangswelle 20. Der Kraftfluß läuft von der Eingangswelle 10, über die Lastschaltkupplung K1, die Zwischenwelle 12, die Zahnradkupplung S2, die Getriebekonstante C1, die Zahnradkupplung S4, die Vorgelegewelle 16, das Zahnradpaar ZI/II und über die Zahnradkupplung S3 zur Ausgangswelle 20.

Das Losrad 28 der zweiten Getriebekonstanten C2 ist durch die Zahnradkupplung S1 mit der Zwischenwelle 14 gekuppelt. Der zweite Getriebegang II ist vorgewählt und kann allein durch eine Überschneidungssteuerung bzw. durch Schließen der zweiten Lastschaltkupplung K2 und durch Öffnen der ersten Lastschaltkupplung K1 unter Last besonders komfortabel geschaltet werden.

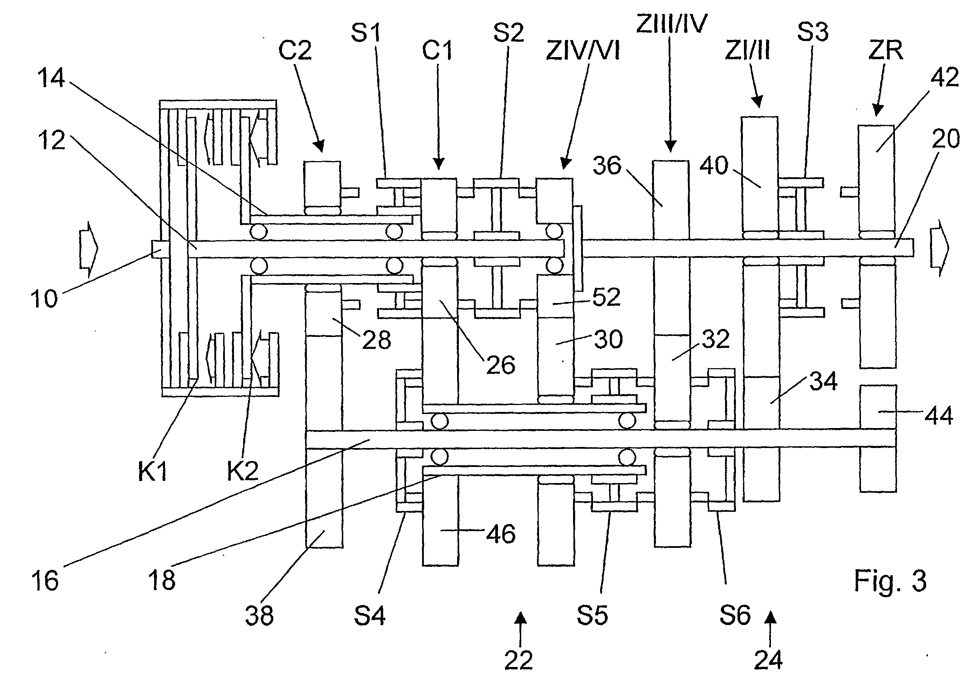

Fig. 3 zeigt das Zahnräderwechselgetriebe beim Anfahrvorgang aus dem ersten Getriebegang I mit der zweiten Lastschaltkupplung K2. Die Lastschaltkupplung K2 ist geschlossen, die Zahnradkupplung S1 kuppelt die Zwischenwelle 14 mit dem Losrad 26 der ersten Getriebekonstanten C1, die Zahnradkupplung S4 kuppelt die Getriebekonstante C1 mit der Vorgelegewelle 16 und die Zahnradkupplung S3 kuppelt das Losrad 40 des Zahnradpaars ZI/II mit der Ausgangswelle 20. Der Kraftfluß läuft von der Eingangswelle 10, über die zweite Lastschaltkupplung K2, die Zwischenwelle 14, die Zahnradkupplung S1, die Getriebekonstante C1, die Zahnradkupplung S4, die Vorgelegewelle 16, das Zahnradpaar ZI/II und über die Zahnradkupplung S3 zur Ausgangswelle 20.

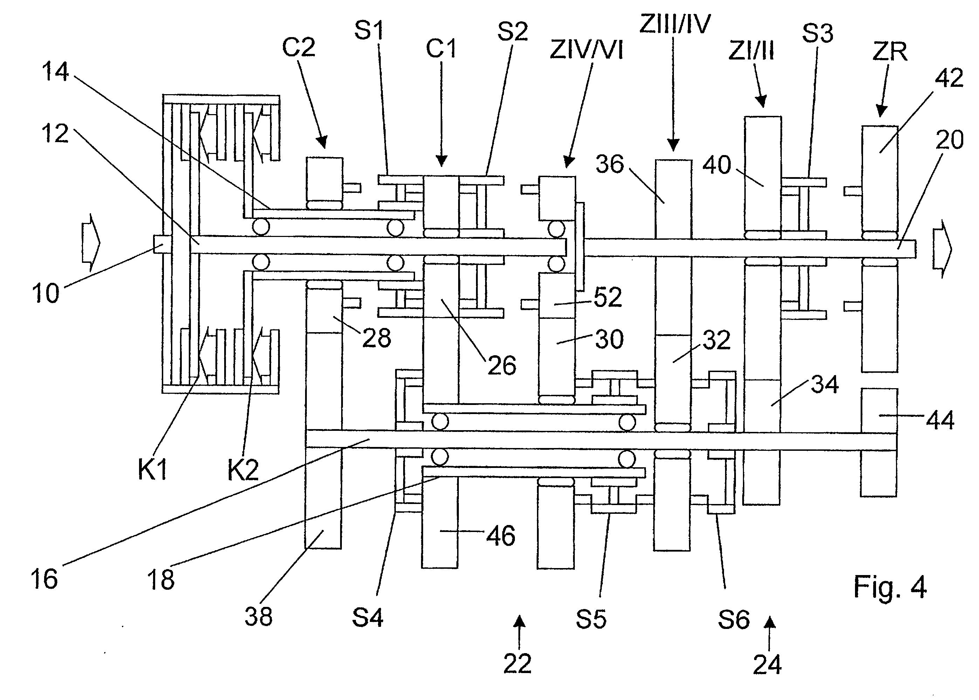

Fig. 4 zeigt das Zahnräderwechselgetriebe beim Anfahrvorgang aus dem ersten Getriebegang I mit der ersten und der zweiten Lastschaltkupplung K1, K2. Die Lastschaltkupplungen K1, K2 sind geschlossen, die Zahnradkupplung S1 kuppelt die Zwischenwelle 14 und die Zahnradkupplung S2 kuppelt die Zwischenwelle 12 mit dem Losrad 26 der Getriebekonstanten C1. Die Zahnradkupplung S4 kuppelt die Getriebekonstante C1 mit der Vorgelegewelle 16 und die Zahnradkupplung S3 kuppelt das Losrad 40 des Zahnradpaars ZI/II mit der Ausgangswelle 20. Der Kraftfluß läuft von der Eingangswelle 10 über die Lastschaltkupplungen K1, K2, über die Zwischenwellen 12, 14, über die Zahnradkupplungen S1, S2, die Getriebekonstante C1, die Zahnradkupplung S4, die Vorgelegewelle 16, das Zahnradpaar ZI/II und über die Zahnradkupplung S3 zur Ausgangswelle 20. Sinkt die Differenzdrehzahl in den Lastschaltkupplungen K1, K2 auf Null, wird die Lastschaltkupplung K2 geöffnet.

Beide Lastschaltkupplungen K1 und K2 sind zum Anfahren über die gleiche Getriebekonstante C1 und über das gleiche Zahnradpaar ZI/II mit der Ausgangswelle 20 wirkungsmäßig verbindbar. Die erste und die zweite Lastschaltkupplung K1, K2 können abhängig von Betriebsparametern wahlweise einzeln, oder gemeinsam zum Anfahren aus dem ersten Getriebegang I genutzt werden. Wird allein mit der zweiten Lastschaltkupplung K2 aus dem ersten Getriebegang I angefahren, kann durch Übergabe an die Lastschaltkupplung K1 ohne Zugkraftunterbrechung oder direkt mit Zugkraftunterbrechung in den zweiten Getriebegang II geschaltet werden.

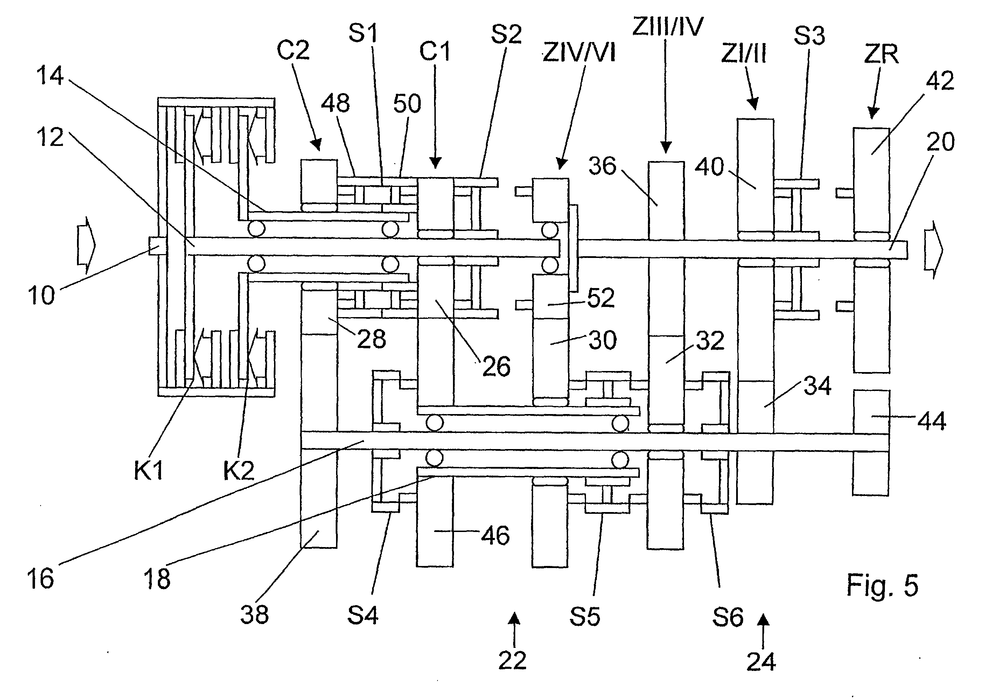

Fig. 5 zeigt das Zahnräderwechselgetriebe beim Anfahrvorgang aus dem zweiten Getriebegang II mit beiden Lastschaltkupplungen K1, K2. Beide Lastschaltkupplungen K1, K2 sind geschlossen, die Zahnradkupplung S2 kuppelt das Losrad 26 der ersten Getriebekonstanten C1 mit der Zwischenwelle 12, die Zahnradkupplung S1 kuppelt das Losrad 26 der ersten Getriebekonstanten C1 und das Losrad 28 der zweiten Getriebekonstanten C2 mit der Zwischenwelle 14. Die Zahnradkupplung S3 kuppelt das Losrad 40 des Zahnradpaars ZI/II mit der Ausgangswelle 20. Der Kraftfluß läuft von der Eingangswelle 10 über die Lastschaltkupplungen K1, K2, die Zwischenwellen 12, 14, die Zahnradkupplungen S1, S2, die Getriebekonstante C2, die Vorgelegewelle 16, das Zahnradpaar ZI/II und über die Zahnradkupplung S3 zur Ausgangswelle 20. Die Zahnradkupplung S1 besteht aus zwei miteinander verbundenen und ineinander verschiebbaren Teilen 48, 50. Ferner sind verschiedene dem Fachmann als sinnvoll erscheinende Konstruktionen möglich, bei denen die beiden Losräder 26, 28 der Getriebekonstanten C1, C2 mit der Zwischenwelle 14 wirkungsmäßig verbunden werden können.

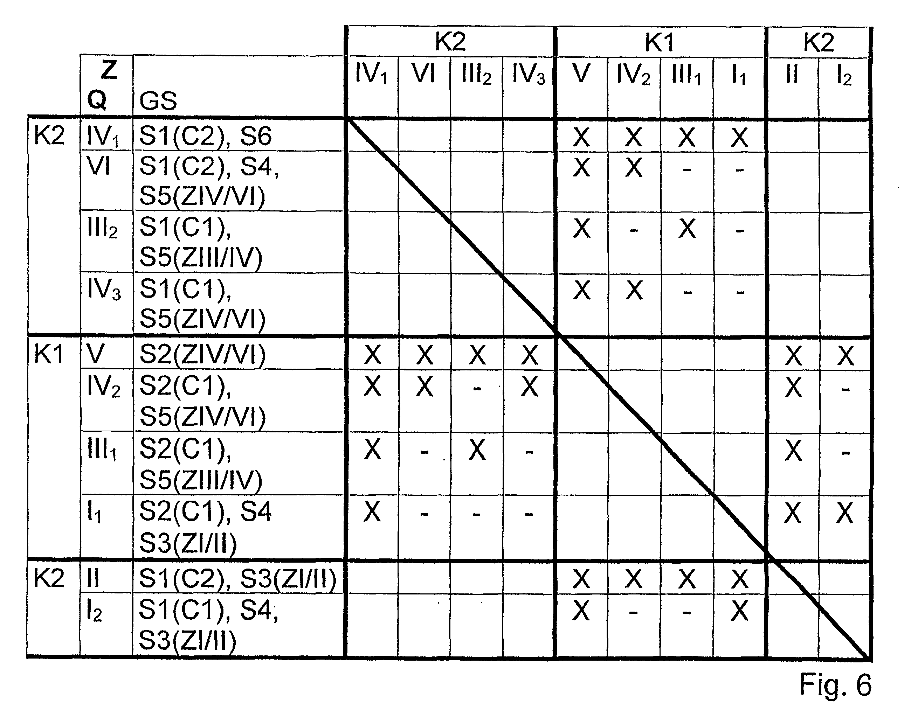

In Fig. 6 ist eine Übersicht über mögliche Gangwechsel unter Last jeweils von einem Quellgang Q zu einem Zielgang Z dargestellt. Die möglichen Gangwechsel sind mit X gekennzeichnet. Unter GS sind jeweils die geschalteten Zahnradkupplungen aufgeführt. Sind neben einer Neutralstellung der Zahnradkupplung zwei Schaltstellungen möglich, ist jeweils zu der Zahnradkupplung die gekuppelte Getriebekonstante bzw. das gekuppelte Zahnradpaar genannt. Mit den zwei Getriebekonstanten C1 und C2 und den drei Zahnradpaaren ZI/II, ZIII/IV, ZIV/VI können sechs verschiedene Vorwärtsgetriebegänge I, II, III, IV, V, VI erreicht werden, wobei der erste Getriebegang I_{1,2} zweimal, der dritte Getriebegang III_{1, 2} zweimal und der vierte Getriebegang IV_{1, 2, 3} dreimal vorkommt.

Von den Getriebegängen I₁, III₁, V kann mit einer Überschneidungssteuerung von der Lastschaltkupplung K1 auf K2 jeweils sequentiell unter Last in die Getriebegänge II, IV₁, VI geschaltet werden und umgekehrt. Ferner sind wichtige Doppelhochschaltungen und Doppelrückschaltungen unter Last möglich, und zwar Doppelrückschaltungen von VI auf IV₂, von V auf III₂, von IV₂ auf II und Doppelhochschaltungen, von II auf IV₂, von III₂ auf V und von IV₂ auf VI. Daneben sind weitere mit X gekennzeichnete Mehrfachschaltungen unter Last möglich.

Vor einem Schalten aus dem vierten Getriebegang IV_{1, 2, 3} zu einem Zielgang wird stets der vierte Getriebegang IV_{1, 2, 3} unter Last gewählt von dem aus ein Schalten zum Zielgang unter Last möglich ist. Das gleiche gilt für den dritten Getriebegang III_{1, 2}

## Patentansprüche

1. Zahnräderwechselgetriebe, bei dem eine Eingangswelle mit einer Ausgangswelle durch ein erstes und ein zweites Teilgetriebe (22 und 24) verbunden ist, die im Kraftfluß parallel zueinander angeordnet sind und je eine reibschlüssige Lastschaltkupplung (K1 und K2) und je eine Zwischenwelle (12 und 14) aufweisen, wobei jeweils die Zwischenwelle über die Lastschaltkupplung mit der Eingangswelle (10) wirkungsmäßig verbindbar ist, und mit zumindest einer ersten Getriebekonstanten,
**dadurch gekennzeichnet ,**
**daß** die erste Lastschaltkupplung (K1) über eine erste Getriebekonstante (C1) und die zweite Lastschaltkupplung (K2) über die erste Getriebekonstante (C1) jeweils mit einer Übersetzung des niedrigsten Getriebegangs (I) zum Anfahren mit der Ausgangswelle (20) in Wirkverbindung bringbar ist.

2. Zahnräderwechselgetriebe nach Anspruch 1,
**dadurch gekennzeichnet,**
**daß** die erste und die zweite Lastschaltkupplung (K1, K2) gleichzeitig mit der Übersetzung des niedrigsten Getriebegangs (I) mit der Ausgangswelle (20) in Wirkverbindung bringbar sind.

3. Zahnräderwechselgetriebe nach einem der vorhergehenden Ansprüche,
**dadurch gekennzeichnet,**
**daß** zumindest die dem niedrigsten Getriebegang (I) zugeordnete Getriebekonstante (C1) mit der ersten und der zweiten Last-schaltkupplung (K1, K2) in Wirkverbindung bringbar ist.

4. Zahnräderwechselgetriebe nach Anspruch 3,
**dadurch gekennzeichnet,**
**daß** beide Lastschaltkupplungen (K1, K2) zum Anfahren über die gleiche Getriebekonstante (C1, C2) und über das gleiche Zahnradpaar (ZI/II) mit der Ausgangswelle (20) in Wirkverbindung bringbar sind.

5. Zahnräderwechselgetriebe nach dem Oberbegriff des Anspruchs 1,
**dadurch gekennzeichnet,**
**daß** die erste Lastschaltkupplung (K1) über eine Getriebekonstante (C2) und die zweite Lastschaltkupplung (K2) über diese Getriebekonstante (C2) zum Anfahren mit einer Übersetzung des zweitniedrigsten Getriebegangs (II) mit der Ausgangswelle (20) in Wirkverbindung bringbar ist.

6. Zahnräderwechselgetriebe nach Auspruch 5,
**dadurch gekennzeichnet,**
**daß** die erste und die zweite Lastschaltkupplung (K1, K2) gleichzeitig mit der Übersetzung des zweitniedrigsten Getriebegangs (II) mit der Ausgangswelle (20) in Wirkverbindung bringbar sind.

7. Zahnräderwechselgetriebe nach Anspruch 6,
**dadurch gekennzeichnet,**
**daß** auf der ersten Zwischenwelle (12) ein Zahnrad (26) der ersten Getriebekonstanten (C1) angeordnet ist und auf der zweiten Zwischenwelle (14) ein Zahnrad (28) von zumindest einer zweiten Getriebekonstanten (C2) angeordnet ist und die erste Zwischenwelle (12) über ein zwischen den Zahnrändern (26, 28) angeordnetes Schaltelement (S1) und über die zweite Getriebekonstante (C2) mit der Ausgangswelle (20) in Wirkverbindung bringbar ist.

8. Zahnräderwechselgetriebe nach einem der vorhergehenden Ansprüche,
**dadurch gekennzeichnet,**
**daß** ein Zahnradpaar (ZI/II) dem niedrigsten und dem zweitniedrigsten Getriebegang (I, II) zugeordnet ist.

9. Zahnräderwechselgetriebe nach einem der vorhergehenden Ansprüche,
**dadurch gekennzeichnet,**
**daß** die Zwischenwelle (12) des ersten Teilgetriebes (22) über die erste Getriebekonstante (C1) mit einer zur Eingangswelle (10) parallelen zweiten Vorgelegewelle (18) in Wirkverbindung bringbar ist, welche zumindest über ein dem ersten Teilgetriebe (22) zugeordnetes Zahnradpaar (ZIV/VI) mit der Ausgangswelle (20) in Wirkverbindung bringbar ist, und daß die erste Getriebekonstante (C1) wahlweise mit der ersten, der zweiten oder mit beiden Lastschaltkupplungen (K1, K2) in Wirkverbindung bringbar ist.

10. Zahnräderwechselgetriebe nach Anspruch 9,
**dadurch gekennzeichnet,**
**daß** die Ausgangswelle (20) durch ein ein- und ausrückbares Schaltelement (S2) zur Bildung eines direkten Getriebegangs (V) mit der Zwischenwelle (12) des ersten Teilgetriebes (22) verbindbar ist.

11. Zahnräderwechselgetriebe nach einem der vorhergehenden Ansprüche,
**dadurch gekennzeichnet,**
**daß** neben der ersten Getriebekonstanten (C1) auf der ersten Zwischenwelle (12) zumindest eine zweite, von der ersten Getriebekonstante (C1) verschiedene Getriebekonstante (C2) auf der zweiten Zwischenwelle (14) angeordnet ist und zumindest eine Getriebekonstante (C1, C2) über beide Vorgelegewellen (16, 18) mit der Ausgangswelle (20) in Wirkverbindung bringbar ist.

12. Zahnräderwechselgetriebe nach Anspruch 11,
**dadurch gekennzeichnet,**
**daß** jedes Zahnradpaar (ZI/II, ZIII/IV, ZIV/VI, ZR) mit jeder Getriebekonstanten (C1, C2) in Wirkverbindung bringbar ist.

13. Zahnräderwechselgetriebe nach einem der vorhergehenden Ansprüche,
**dadurch gekennzeichnet,**
**daß** neben zwei Getriebekonstanten (C1, C2) drei Zahnradpaare (ZI/II, ZIII/IV, ZIV/VI) für sechs verschiedene Vorwärtsgetriebegänge (I, II, III, IV, V, VI) und ein Zahnradpaar (ZR) für zumindest einen Rückwärtsgetriebegang (R) angeordnet sind und ein Zahnrad (30) des dem vierten und sechsten Getriebegang (IV, VI) zugeordneten Zahnradpaars (ZIV/VI) auf einer zweiten Vorgelegewelle (18), ein Zahnrad (32) des dem dritten und vierten Getriebegang (III, IV) zugeordneten Zahnradpaars (ZIII/IV) und ein Zahnrad (34) des dem ersten und zweiten Getriebegang (I, II) zugeordneten Zahnradpaars (ZI/II) auf der ersten Vorgelegewelle (16) angeordnet ist.

14. Verfahren zum Schalten eines Zahnräderwechselgetriebes nach einem der vorhergehenden Ansprüche,
**dadurch gekennzeichnet,**
**daß** abhängig von zumindest einem Betriebsparameter die erste, die zweite oder beide Lastschaltkupplungen (K1, K2) gemeinsam zum Anfahren genutzt werden.

15. Verfahren nach Anspruch 14,
**dadurch gekennzeichnet,**
**daß** die Differenzdrehzahl zumindest an einer Lastschaltkupplung (K1, K2) und die zu übertragende Leistung erfaßt und abhängig von der Differenzdrehzahl und der zu übertragenden Leistung die Lastschaltkupplungen (K1, K2) einzeln oder gemeinsam zum Anfahren genutzt werden.

16. Verfahren nach einem der Ansprüche 14 oder 15,
**dadurch gekennzeichnet,**
**daß** das Gewicht des Kraftfahrzeugs inklusive Ladung und/oder die Steigung einer Fahrstrecke des Kraftfahrzeugs erfaßt werden und abhängig von Gewicht und/oder Steigung die Lastschaltkupplungen (K1, K2) einzeln oder gemeinsam zum Anfahren genutzt werden.

17. Verfahren nach einem der Ansprüche 14 bis 16,
**dadurch gekennzeichnet,**
**daß** von zumindest einer Lastschaltkupplung (K1, K2) die sich einstellende Temperatur erfaßt wird und abhängig von der Temperatur die Lastschaltkupplungen (K1, K2) einzeln und oder gemeinsam zum Anfahren genutzt werden.

18. Verfahren nach einem der Ansprüche 14 bis 17,
**dadurch gekennzeichnet,**
**daß** der Verschleiß an den Lastschaltkupplungen (K1, K2) erfaßt wird und abhängig vom Verschleiß die Lastschaltkupplungen (K1, K2) einzeln oder gemeinsam zum Anfahren genutzt werden.

19. Verfahren nach Anspruch 18,
**dadurch gekennzeichnet,**
**daß** die Lastschaltkupplungen (K1, K2) derart zum Anfahren eingesetzt werden, daß sich bei beiden Lastschaltkupplungen (K1, K2) weitgehend der gleiche Verschleiß einstellt.

20. Verfahren nach Anspruch 19,
**dadurch gekennzeichnet,**
**daß** ab einem bestimmten Verschleiß nur noch eine der beiden Lastschaltkupplungen (K1) zum Anfahren genutzt wird.

21. Verfahren nach einem der Ansprüche 14 bis 20,
**dadurch gekennzeichnet,**
**daß** bei Ausfall einer Lastschaltkupplung (K1, K2) die andere Lastschaltkupplung (K1, K2) zum Anfahren genutzt wird.

## Claims

1. A gear change transmission in which an output shaft is connected to an input shaft by means of first and second sub-transmissions (22 and 24) which are positioned parallel to one another in the power flow, each having a frictionally engaged powershift clutch (K1 and K2) and an intermediate shaft, it being possible to connect the intermediate shaft to the input shaft (10) actively via the powershift clutch, and with at least a first transmission constant,
**characterised in that**
both the first powershift clutch (K1) and the second powershift clutch (K2) can be actively engaged with the output shaft (20) via the same first transmission constant (C1) each with a gear ratio of the lowest gear (I) for starting.

2. A gear change transmission in accordance with claim 1,
**characterised in that**
the first and second powershift transmissions (K1, K2) can be actively engaged with the output shaft (20) at the same time as the gear ratio of the lowest gear (I).

3. A gear change transmission in accordance with one of the preceding claims,
**characterised in that**
at least the transmission constant (C1) assigned to the lowest gear (I) can be actively engaged with the first and second powershift clutches (K1,K2).

4. A gear change transmission in accordance with claim 3,
**characterised in that**
both powershift clutches (K1, K2) can be actively engaged with the output shaft (20) via the same transmission constants (C1, C2) and via the same gear pair (ZI/II) for starting.

5. A gear change transmission in accordance with the pre-**characterising** clause of claim 1,
**characterised in that**
the first powershift clutch (K1) and the second powershift clutch (K2) can be actively engaged with the output shaft (20) via the same transmission constant (C2) to start the vehicle in a gear ratio of the second lowest gear (II).

6. A gear change transmission in accordance with claim 5,
**characterised in that**
the first and second powershift clutches (K1, K2) can be actively engaged with the output shaft (20) at the same time as the gear ratio of the second lowest gear (II).

7. A gear change transmission in accordance with claim 6,
**characterised in that**
positioned on the first intermediate shaft (12) is a gear wheel (26) of the first transmission constant (C1) and positioned on the second intermediate shaft (14) is a gear wheel (28) of at least a second transmission constant (C2), and the first intermediate shaft (12) can be actively engaged with the output shaft (20) via a shifting element (S1) positioned between the gear wheels (26, 28) and via the second transmission constant (C2).

8. A gear change transmission in accordance with one of the preceding claims,
**characterised in that**
a gear pair (ZI/II) is assigned to the lowest and to the second lowest gears (I, II).

9. A gear change transmission in accordance with one of the preceding claims,
**characterised in that**
the intermediate shaft (12) of the first sub-transmission (22) can be actively engaged via the first transmission constant (C1) with a second countershaft (18) which is parallel to the input shaft (10) and can itself be actively engaged with the output shaft (20) at least via a gear pair (ZIV/VI) assigned to a first sub-transmission (22), and that the first transmission constant (C1) can be actively engaged with either the first or the second or with both powershift clutches (K1, K2).

10. A gear change transmission in accordance with claim 9,
**characterised in that**
the output shaft (20) can be connected to the intermediate shaft (12) of the first sub-transmission (22) by means of an engageable and disengageable shifting element (S2) to form a direct gear (V).

11. A gear change transmission in accordance with one of the preceding claims,
**characterised in that**
in addition to the first transmission constant (C1) on the first intermediate shaft (12), at least one second transmission constant (C2) different from the first transmission constant (C1) is positioned on the second intermediate shaft (14) and at least one transmission constant (C1, C2) can be actively engaged with the output shaft (20) via the two countershafts (16, 18).

12. A gear change transmission in accordance with claim 11,
**characterised in that**
each gear pair (ZI/II, ZIII/IV, ZIV/VI, ZR) can be actively engaged with each transmission constant (C1, C2).

13. A gear change transmission in accordance with one of the preceding claims,
**characterised in that**
three gear pairs (ZI/II, ZIII/IV, ZIV/VI) for six different forward gears (I, II, III, IV, V, VI) and one gear pair (ZR) for at least one reverse gear (R) are positioned next to two transmission constants (C1, C2), one gear wheel (30) of the gear pair (ZIV, VI) assigned to the fourth and sixth gears (IV, VI) is positioned on a second countershaft (18), and one gear wheel (32) of the gear pair (ZIII/IV) assigned to the third and fourth gears (III/IV) and one gear wheel (34) of the gear pair (ZI/II) assigned to the first and second gears are positioned on the first countershaft (16).

14. A process for shifting gear in a gear change transmission in accordance with one of the preceding claims,
**characterised in that**
the first, the second or both powershift clutches (K1, K2) together are used for starting dependent on at least one operating parameter.

15. A process in accordance with claim 14,
**characterised in that**
the differential speed at at least one powershift clutch (K1, K2) and the power to be transmitted are measured and the powershift clutches (K1, K2) are used individually or together for starting dependent on the differential speed and the power to be transmitted.

16. A process in accordance with one of claims 14 or 15,
**characterised in that**
the weight of the motor vehicle including its load and/or the gradient of a section of road travelled by the motor vehicle are measured and the powershift clutches (K1, K2) are used individually or together for starting dependent on the weight and/or the gradient.

17. A process in accordance with one of claims 14 to 16,
**characterised in that**
the temperature which arises is measured by at least one powershift clutch (K1, K2), and the powershift clutches (K1, K2) are used individually or together for starting dependent on the temperature.

18. A process in accordance with one of claims 14 to 17,
**characterised in that**
the wear on the powershift clutches (K1, K2) is measured, and the powershift clutches (K1, K2) are used individually or together for starting dependent on the level of wear.

19. A process in accordance with claim 18,
**characterised in that**
the powershift clutches (K1, K2) are used for starting in such a manner that largely the same level of wear occurs on both powershift clutches (K1,K2).

20. A process in accordance with claim 19,
**characterised in that**
with effect from a certain level of wear only one of the two powershift clutches (K1, K2) is used for starting.

21. A process in accordance with one of claims 14 to 20,
**characterised in that**
in the event of the failure of one powershift clutch (K1, K2), the other powershift clutch (K1, K2) is used for starting.

## Revendications

1. Boîte de vitesses à engrenages, dans laquelle un arbre d'entrée est relié à un arbre de sortie par une première et par une deuxième voie de transmission partielle (22 et 24) qui sont agencées parallèlement l'une à l'autre dans le flux de force et qui comprennent chacune un embrayage sous charge (K1 et K2) en coopération de friction et un arbre intermédiaire (12 et 14), l'arbre intermédiaire respectif étant susceptible d'être relié en action à l'arbre d'entrée (10) via l'embrayage sous charge, et possédant au moins une première constante de transmission,
**caractérisée en ce que** le premier embrayage sous charge (K1) peut être amené en liaison d'action avec l'arbre de sortie (20) via une première constante de transmission (C1) et le deuxième embrayage sous charge (K2) peut être amené en liaison d'action avec ledit arbre via la première constante de transmission (C1), chacun avec une démultiplication du rapport de vitesses le plus petit (I), pour le démarrage.

2. Boîte de vitesses à engrenages selon la revendication 1, **caractérisée en ce que** le premier et le deuxième embrayage sous charge (K1, K2) peuvent être amenés en liaison d'action simultanément à l'arbre de sortie (20) avec la démultiplication du rapport de vitesses le plus petit (I).

3. Boîte de vitesses à engrenages selon l'une des revendications précédentes, **caractérisée en ce qu'**au moins la constante de transmission (C1) associée au rapport de vitesses le plus petit (I) peut être amenée en liaison d'action avec le premier et le deuxième embrayage sous charge (K1, K2).

4. Boîte de vitesses à engrenages selon la revendication 3, **caractérisée en ce que** les deux embrayages sous charge (K1, K2) peuvent être amenés en liaison d'action avec l'arbre de sortie (20) via la même constante de transmission (C1, C2) et via la même paire d'engrenages (ZI/II) pour le démarrage.

5. Boîte de vitesses à engrenages selon le préambule de la revendication 1, **caractérisée en ce que** le premier embrayage sous charge (K1) peut être amené en liaison d'action avec l'arbre de sortie (20) via une constante de transmission (C2) et le deuxième embrayage sous charge (K2) peut être amené en liaison d'action avec ledit arbre via cette constante de transmission (C2) avec une démultiplication du rapport de vitesses suivant le plus petit (II), pour le démarrage.

6. Boîte de vitesses à engrenages selon la revendication 5, **caractérisée en ce que** le premier et le deuxième embrayage sous charge (K1, K2) peuvent être amenés en liaison d'action simultanément à l'arbre de sortie (20) avec la démultiplication du rapport de vitesses suivant le plus petit (II).

7. Boîte de vitesses à engrenages selon la revendication 6, **caractérisée en ce qu'**un engrenage (26) de la première constante de transmission (C1) est agencé sur le premier arbre intermédiaire (12), et un engrenage (28) d'au moins une deuxième constante de transmission (C2) est agencé sur le deuxième arbre intermédiaire (14), et le premier arbre intermédiaire (12) peut être amené en liaison d'action avec l'arbre de sortie (20) via un élément de commutation (S1) agencé entre les engrenages (26, 28) et via la deuxième constante de transmission (C2).

8. Boîte de vitesses à engrenages selon l'une des revendications précédentes, **caractérisée en ce qu'**une paire d'engrenages (ZI/II) est associée au rapport de vitesses le plus petit et au rapport de vitesses suivant le plus petit (I, II).

9. Boîte de vitesses à engrenages selon l'une des revendications précédentes, **caractérisée en ce que** l'arbre intermédiaire (12) de la première voie de transmission partielle (22) peut être amené en liaison d'action avec un deuxième arbre de renvoi (18) parallèle à l'arbre d'entrée (10) via la première constante de transmission (C1), arbre de renvoi qui peut être amené en liaison d'action à l'arbre de sortie (20) au moins via une paire d'engrenages (ZIV/VI) associée à la première voie de transmission partielle (22), et **en ce que** la première constante de transmission (C1) peut être amenée en liaison d'action au choix avec le premier embrayage, avec le deuxième embrayage ou avec les deux embrayages sous charge (K1, K2).

10. Boîte de vitesses à engrenages selon la revendication 9, **caractérisée en ce que** l'arbre de sortie (20) peut être relié à l'arbre intermédiaire (12) de la première voie de transmission partielle (22) par un élément de commutation (S2) susceptible d'être engagé et dégagé pour former un rapport de vitesses direct (V).

11. Boîte de vitesses à engrenages selon l'une des revendications précédentes, **caractérisée en ce qu'**il est prévu, à côté de la première constante de transmission (C1) sur le premier arbre intermédiaire (12), au moins une deuxième constante de transmission (C2) différente de la première constante de transmission (C1) sur le deuxième arbre intermédiaire (14), et au moins une constante de transmission (C1, C2) est susceptible d'être amenée en liaison d'action avec l'arbre de sortie (20) via les deux arbres de renvoi (16, 18).

12. Boîte de vitesses à engrenages selon la revendication 11,
**caractérisée en ce que** chaque paire d'engrenages (ZI/II, ZIII/IV, ZIV/VI, ZR) est susceptible d'être amenée en liaison d'action avec chaque constante de transmission (C1, C2).

13. Boîte de vitesses à engrenages selon l'une des revendications précédentes, **caractérisée en ce qu'**il est prévu, à côté de deux constantes de transmission (C1, C2), trois paires d'engrenages (ZI/II, ZIII/IV, ZIV/VI) pour six rapports de vitesses différents en marche avant (I, II, III, IV, V, VI) et une paire d'engrenages (ZR) pour au moins un rapport de vitesses en marche amère (R), et un engrenage (30) de la paire d'engrenages (ZIV/VI) associée au quatrième et au sixième rapport de vitesses (IV, VI) est agencé sur un deuxième arbre de renvoi (18), un engrenage (32) de la paire d'engrenages (ZIII/IV) associée au troisième et au quatrième rapport de vitesses (III, IV) et un engrenage (34) de la paire d'engrenages (ZI/II) associée au premier et au deuxième rapport de vitesses (I, II) sont agencés sur le premier arbre de renvoi (16).

14. Procédé pour le changement de rapport de vitesses d'une boîte de vitesses à engrenages selon l'une des revendications précédentes, caractézisé en ce que pour le démarrage on utilise le premier embrayage, le deuxième embrayage ou les deux embrayages sous charge (K1, K2) conjointement en fonction d'au moins un paramètre de fonctionnement.

15. Procédé selon la revendication 14, **caractérisé en ce que** l'on détecte la vitesse de rotation différentielle sur au moins un embrayage sous charge (K1, K2) et la puissance à transmettre, et pour le démarrage on utilise les embrayages sous charge (K1, K2) individuellement ou conjointement en fonction de la vitesse de rotation différentielle et de la puissance à transmettre.

16. Procédé selon l'une ou l'autre des revendications 14 et 15,
**caractérisé en ce que** l'on détecte le poids du véhicule automobile, y compris la charge, et/ou la pente d'un trajet de parcours du véhicule automobile, et pour le démarrage on utilise les embrayages sous charge (K1, K2) individuellement ou conjointement en fonction du poids et/ou de la pente.

17. Procédé selon l'une des revendications 14 à 16, **caractérisé en ce que** l'on détecte la température qui s'établit dans au moins un embrayage sous charge (K1, K2), et pour le démarrage on utilise les embrayages sous charge (K1, K2) individuellement ou conjointement en fonction de la température.

18. Procédé selon l'une des revendications 14 à 17, **caractérisé en ce que** l'on détecte l'usure au niveau des embrayages sous charge (K1, K2), et pour le démarrage on utilise les embrayages sous charge (K1, K2) individuellement ou conjointement en fonction de l'usure.

19. Procédé selon la revendication 18, **caractérisé en ce que** l'on utilise les embrayages sous charge (K1, K2) pour le démarrage de telle sorte qu'au niveau des deux embrayages sous charge (K1, K2) s'établit sensiblement la même usure.

20. Procédé selon la revendication 19, **caractérisé en ce qu'**à partir d'une usure déterminée, on n'utilise plus que l'un des deux embrayages sous charge (K1) pour le démarrage.

21. Procédé selon l'une des revendications 14 à 20, **caractérisé en ce qu'**en cas de défaillance d'un embrayage sous charge (K1, K2), on utilise l'autre embrayage sous charge (K1, K2) pour le démarrage.
